# EUROPÄISCHE PATENTSCHRIFT

(11) **EP 2 664 866 B1**
(45) Veröffentlichungstag und Bekanntmachung des Hinweises auf die Patenterteilung: **23.12.2020**
(21) Anmeldenummer: 12168241.3
(22) Anmeldetag: 16.05.2012
(51) Int. Cl.: F24S 25/16, F24S 25/50, F24S 25/65

(54) **Anordnung für die Lagerung mindestens eines Solarmoduls auf einer Unterlage**
Arrangement für the mounting of at least one solar module on a base
Arrangement pour le montage d'au moins un module solaire

(43) Veröffentlichungstag der Anmeldung: 20.11.2013
(73) Patentinhaber: M + K Bausysteme AG, 6300 Zug (CH)
(72) Erfinder: Mikesch, Walter, 5430 Wettingen (CH)
(74) Vertreter: Frischknecht, Harry Ralph

(56) Entgegenhaltungen:
- WO-A1-2009/095273
- DE-U1-202006 020 180
- DE-U1-202010 015 817
- US-A1- 2010 212 720

## Beschreibung

### TECHNISCHES GEBIET

Die vorliegende Erfindung betrifft eine Vorrichtung zur Befestigung von Solarmodulen, insbesondere von Photovoltaikmodulen zur Erzeugung von elektrischer Energie oder Sonnenkollektoren zur Erwärmung eines Wärmeträgers, nach dem Oberbegriff von Anspruch 1. Eine solche Vorrichtung wird durch die Schrift DE 20 2010015817 U offenbart und bildet den nächstliegenden Stand der Technik.

### STAND DER TECHNIK

Aus dem Stand der Technik sind verschiedene Vorrichtungen zur Befestigung von Solarmodulen, wie Photovoltaikmodule zur Erzeugung elektrischer Energie oder Sonnenkollektoren zur Erhitzung eines Wärmeträgers bekannt. Solche Vorrichtung dienen im Wesentlichen der Lagerung und der Ausrichtung der Solarmodule. Typischerweise weisen die bekannten Vorrichtung aber einen komplexen mechanischen Aufbau auf und lassen sich vielfach nicht effizient bei Nachrüstungen von bestehenden Liegenschaften einsetzen.

Beispielsweise zeigt die DE 20 2009 009 210 eine Solarzellenauflageeinrichtung für die Montage einer Solarzelle. Die Vorrichtung nach der DE 20 2009 009 210 umfasst ein stabförmiges Montageelement und ein stabförmiges Auflageelement, welches mit dem Montageelement in Verbindung steht. Das Auflageelement dient im Wesentlichen der Aufnahme eines Solarmoduls und das Montageelement hat eine Stützwirkung. Beide Elemente, also sowohl Montageelement als auch Auflageelement werden mit Verbindungselementen mit dem Dach verbunden, was gerade bei Flachdächern dazu führt, dass diese durch die Verbindungselemente beschädigt werden können.

### DARSTELLUNG DER ERFINDUNG

Ausgehend von diesem Stand der Technik liegt der Erfindung eine Aufgabe zugrunde, eine Vorrichtung zu Befestigung von Solarmodulen anzugeben, welche die Nachteile des Standes der Technik überwindet. Insbesondere soll eine Vorrichtung angegeben werden, welche bei der Montage nicht zu Beschädigungen am Dach oder an der Auflagefläche führen wird.

Diese Aufgabe löst die Vorrichtung nach Anspruch 1. Demgemäss umfasst eine Lagerungsvorrichtung für die Montage eines Solarmoduls auf einer Unterlage ein erstes Auflageelement mit einem Verbindungsabschnitt, einem Stützabschnitt und einem zwischen dem Verbindungsabschnitt und Stützabschnitt angeordneten Lagerungsabschnitt zur Aufnahme des besagten Solarmoduls und ein zweites Auflageelement mit einem Verbindungsabschnitt, einem Stützabschnitt und einem optionalen Lagerungsabschnitt. Weiter umfasst die Vorrichtung mindestens ein mit den besagten Lagerungsabschnitten gelagertes Solarmodul. Das Solarmodul steht über die Lagerungsabschnitte mit dem Auflageelement in Verbindung. Der Verbindungsabschnitt des ersten Auflageelementes steht verschwenkbar mit dem Verbindungsabschnitt des zweiten Auflageelementes in Verbindung. Die beiden Auflageelemente stehen mit dem jeweiligen Stützabschnitt direkt und/oder indirekt auf der Unterlage auf. Die Lagerungsvorrichtung weist weiterhin ein auf der Unterlage aufliegendes und/oder ein über der Unterlage verlaufendes Befestigungselement auf, wobei durch das Befestigungselement eine Relativbewegung zwischen dem ersten Auflageelement und dem zweiten Auflageelement bzw. zwischen den Auflageelementen und der Unterlage verhinderbar ist. Die Befestigungselemente dringen dabei nicht in die Unterlage ein. Das Befestigungselement weist die Gestalt von mindestens einem Profilelement auf, wobei das Profilelement eine Aufnahme für den Stützabschnitt des jeweiligen Auflageelementes bereitstellt, wobei das Profilelement im Querschnitt gesehen einen sich in Richtung der einer Profilachse erstreckenden Grundschenkel umfasst, von dem an mindestens einer Seite, vorzugsweise an beiden Seiten, ein Aufnahmeschenkel zur Aufnahme der Stützabschnitte angeformt ist, und wobei der Aufnahmeschenkel sich teilweise um eine parallel zur Profilachse verlaufende Achse herum erstreckt, so dass ein zylindrischer Aufnahmeraum mit einer Zugangsöffnung für den Stützabschnitt bereitstellbar ist.

Die Anordnung des Befestigungselementes auf und/oder über der Unterlage hat den Vorteil, dass keine Befestigungselemente in die Unterlage eindringen, womit die Beschaffenheit der Unterlage keine Rolle spielt. Zudem wird die Unterlage nicht beschädigt, was für die Anordnung auf Hausdächern, insbesondere Flachdächern, von Vorteil ist.

Alternativ aber nicht erfindungsgemäss weist das Befestigungselement die Gestalt eines Verbindungselementes auf, welches eine direkte und/oder eine indirekte Verbindung zwischen dem ersten Auflageelement und dem zweiten Auflageelement bereitstellt.

Das Verbindungselement weist vorzugsweise die Gestalt eines Stabes oder eines Elementes zur Übertragung von Zugkräften, insbesondere ein Seil und/oder ein Draht und/oder eine Kette, auf.

Besonders bevorzugt umfasst das Befestigungselement mindestens ein Verbindungselement und mindestens ein Profilelement, wobei das Verbindungselement mit dem Profilelement direkt oder indirekt, vorzugsweise über die Auflageelement in Verbindung steht, und wobei das Profilelement eine Aufnahme für den Stützabschnitt des jeweiligen Auflageelementes bereitstellt.

Das Befestigungselement kann also verschiedenartig ausgebildet sein. Besonders bevorzugt ist das Befestigungselement folgendermassen ausgebildet:
a. das Befestigungselement weist die Gestalt eines Profilelementes auf, welches auf der Unterlage aufliegt und eine Aufnahme für die Stützabschnitte des ersten Auflageelementes bzw. des zweiten Auflageelementes bereitstellt; oder
b. das Befestigungselement umfasst eine Kombination aus mindestens einen Verbindungselement, welches eine direkte und/oder indirekte Verbindung zwischen dem ersten Auflageelement und dem zweiten Auflageelement bereitstellt, und dem mindestens einen Profilelement.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Seitenansicht einer Lagerungsvorrichtung für Solarmodule;
- Fig. 2: eine perspektivische Ansicht der Lagerungsvorrichtung nach Figur 1 mit installierten Solarmodulen;
- Fig. 3: eine perspektivische Ansicht der Lagerungsvorrichtung nach Figur 1 ohne Solarmodule;
- Fig. 4a: eine Seitenansicht der Verbindung von zwei Auflageelementen der Lagerungsvorrichtung nach Figur 1 nach einer ersten Ausführungsform;
- Fig. 4b: eine Seitenansicht der Verbindung von zwei Auflageelementen der Lagerungsvorrichtung nach Figur 1 nach einer zweiten nicht erfindungsgemässen Ausführungsform;
- Fig. 5: eine perspektivische Ansicht der Verbindung zwischen der Auflageelemente und einem Profilelement;
- Fig. 6: eine Seitenansicht der Auflageelemente im Bereich der Unterlage;
- Fig. 7: eine perspektivische Ansicht eines Befestigungsmittels zur Befestigung des Solarmoduls auf der Lagerungsvorrichtung nach einer der vorhergehenden Figuren; und
- Fig. 8: eine perspektivische Ansicht der Lagerungsvorrichtung nach Figur 1 mit einem Dichtungselement zwischen den beiden Solarmodulen.

### BESCHREIBUNG BEVORZUGTER AUSFÜHRUNGSFORMEN

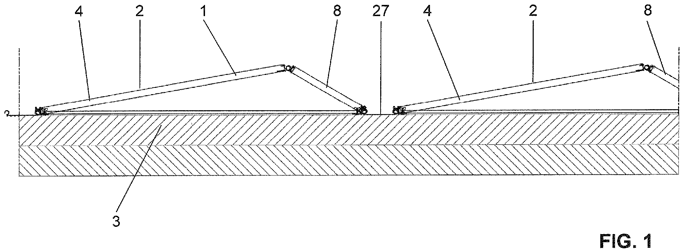

In der Figur 1 wird eine Seitenansicht einer Lagerungsvorrichtung für Solarmodule gezeigt. Hier werden zwei Lagerungsvorrichtungen 1 nebeneinander gezeigt. Die Lagerungsvorrichtungen 1 dienen der Aufnahme von Solarmodulen 2. Unter einem Solarmodul 2 wird in diesem Zusammenhang insbesondere ein Photovoltaikmodul zur Erzeugung von elektrischer Energie oder aber ein Solarkollektor zur Erwärmung eines Fluids verstanden.

Die Lagerungsvorrichtungen 1 stehen dabei auf einer Unterlage 3 auf. Die Unterlage 3 ist beispielsweise ein Flachdach oder die Oberfläche eines Feldes, auf welchem mehrere Lagerungsvorrichtungen 1 angeordnet werden. Die Unterlage 3 umfasst dabei eine Oberfläche 27, auf welcher die Lagerungsvorrichtung 1 aufliegt. Vorzugsweise verläuft die Unterlage 3 bzw. die Oberfläche 27 in einer horizontalen Ebene, wobei die Lagerungsvorrichtungen 1 auf dieser horizontalen Ebene aufstehen. Alternativ kann die Unterlage 3 aber auch zur Horizontalen geneigt verlaufen. Die Art der Unterlage 3 kann somit beliebig ausgebildet sein.

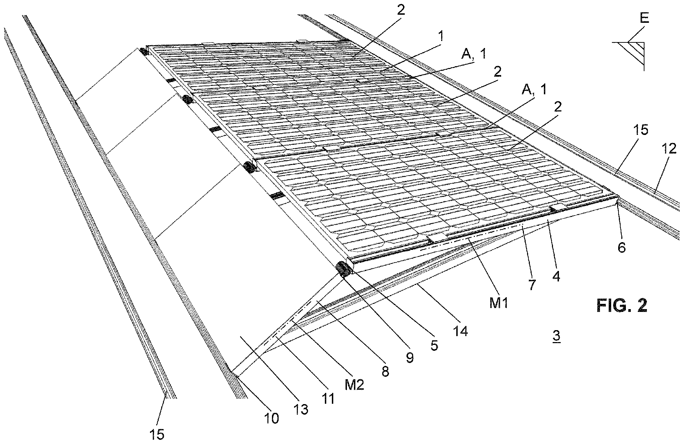

In der Figur 2 wird eine perspektivische Ansicht von mehreren Lagerungsvorrichtungen 1 mit mehreren Solarmodulen 2 gezeigt. In der Figur 2 sind vier Lagerungsvorrichtungen 1 nebeneinander angeordnet und dienen der Aufnahme von drei Solarmodulen 2. Die Anzahl der anzuordnenden Lagerungsvorrichtungen 1 ist im Wesentlichen von der Grösse des Solarmoduls 2 abhängig. Hier in der vorliegenden Ausführungsform sind pro Solarmodul 2 zwei Lagerungsvorrichtungen 1 vorhanden, welche im Bereich der Seite des Solarmoduls 2 liegen. Diejenigen Lagerungsvorrichtungen 1, welche im Bereich des Angrenzens von zwei Solarmodulen 2 angeordnet sind, dienen der Aufnahme von zwei benachbarten bzw. angrenzenden Solarmodulen 2. Diese Lagerungsvorrichtungen 1 sind zusätzlich mit dem Bezugszeichen A zusätzlich gekennzeichnet.

Die Lagerungsvorrichtung 1 umfasst, wie in der Figur 2 ersichtlich, im Wesentlichen ein erstes Auflageelement 4 und ein zweites Auflageelement 8.

Das erste Auflageelement 4 umfasst einen Verbindungsabschnitt 5, einen Stützabschnitt 6, und einen zwischen dem Verbindungsabschnitt 5 und dem Stützabschnitt 6 Lagerungsabschnitt 7. Der Lagerungsabschnitt 7 dient im Wesentlichen der Aufnahme und der Lagerung des Solarmoduls 2 auf dem ersten Auflageelement 4. Hier ist der Lagerungsabschnitt 7 im Wesentlichen stabförmig ausgebildet und erstreckt sich entlang einer Mittelachse M1. Der Verbindungsabschnitt 5 dient der Bereitstellung einer Verbindung mit dem zweiten Auflageelement 8 und der Stützabschnitt 6 dient der Abstützung des ersten Auflageelementes 4 auf der Unterlage 3. Diese Abstützung kann nicht erfindungsgemäss direkt sein, so dass der Stützabschnitt 6 direkt und unmittelbar auf der Unterlage 3 aufliegt bzw. mit der Unterlage 3 in direktem Kontakt steht. Erfindungsgemäss erfolgt die Abstützung indirekt, wie dies in der Figur 2 gezeigt ist. Hierbei steht der Stützabschnitt 6 mit mindestens einem weiteren Element in Verbindung, welches dann auf der Unterlage 3 aufliegt. Das weitere Element hat hier die Gestalt eines Profilelementes 15.

Das zweite Auflageelement 8 umfasst einen Verbindungsabschnitt 9, einen Stützabschnitt 10, und einen optionalen Lagerungsabschnitt 11. Der Verbindungsabschnitt 9 dient der Verbindung des zweiten Auflageelementes 8 mit dem ersten Auflageelement 4 und der Stützabschnitt 10 dient der Abstützung des zweiten Auflageelementes 8 auf der Unterlage 3. Folglich stehen der Verbindungsabschnitt 5 des ersten Auflageelementes 4 mit dem Verbindungsabschnitt 9 des zweiten Auflageelementes 8 in Verbindung. Die Abstützung des Stützabschnittes 10 des zweiten Auflageelementes 8 kann dabei in analoger Weise zur Abstützung des ersten Auflageelementes 4 direkt oder indirekt erfolgen, wobei auf die obige Beschreibung verwiesen wird.

Der Lagerungsabschnitt 11 ist optional angeordnet. Wenn ein Lagerungsabschnitt 11 vorhanden ist, so wie hier in der Figur 2 gezeigt, kann dieser beispielsweise mit einer Platte 13 belegt werden. Alternativ kann der Lagerungsabschnitt 11 auch mit einem Solarmodul belegt werden. Sofern der Lagerungsabschnitt 11 nicht mit einem Element belegt werden soll, kann dieser auch als Zwischenabschnitt 11 zwischen dem Verbindungsabschnitt 9 und dem Stützabschnitt 10 bezeichnet werden.

Der Verbindungsabschnitt 5 des ersten Auflageelementes 4 steht verschwenkbar mit dem Verbindungsabschnitt 9 des zweiten Auflageelementes 8 in Verbindung. Folglich können also die beiden Auflageelemente 4, 8 gegeneinander verschwenkt werden, wodurch die Neigung des Lagerungsabschnittes 7 bzw. des darauf aufliegenden Solarmoduls 2 zur Unterlage 3 und/oder des Lagerungsabschnittes 11 eingestellt werden kann. Weiter stehen die beiden Auflageelemente 4, 8 mit dem jeweiligen Stützabschnitt 6, 10 direkt und/oder indirekt auf der Unterlage 3 auf. In der vorliegend gezeigten Ausführungsform handelt es sich um die indirekte Variante, weil die Auflageelemente 4, 8 mit dem Befestigungselement 12 in der Gestalt eines Profilelementes 15, das auf der Unterlage 3 aufliegt, in Verbindung stehen. Bei der direkten, nicht erfindungsgemässen Auflage ist das Profilelement 15 nicht vorgesehen und das erste Auflageelement 4 und/oder das zweite Auflageelement 8 stehen direkt auf der Unterlage 3 auf.

Weiter umfasst die Lagerungsvorrichtung 1 ein auf der Unterlage 3 aufliegendes und/oder ein über der Unterlage 3 verlaufendes Befestigungselement 12. Das Befestigungselement 12 ist dabei derart angeordnet, dass zwischen dem ersten Auflageelement 4 und dem zweiten Auflageelement 8 bzw. zwischen dem ersten Auflageelement 4 und der Unterlage bzw. zwischen dem zweiten Auflageelement 8 und der Unterlage 3 eine relative Bewegung verhinderbar ist. Das Befestigungselement 12 hält die beiden Auflageelemente 4, 8 somit in einem entsprechend vorgegebenen Winkel. Somit sorgt also das Befestigungselement 12 für eine definierte Ausrichtung zwischen dem ersten Auflageelement 4 und dem zweiten Auflageelement 8 und verhindert weiter ein Abrutschen der Stützabschnitte 6, 10 voneinander weg. Letzteres würde zu einem Einsturz der Lagerungsvorrichtung 1 führen, wobei dann das Solarmodul auf der Unterlage zu liegen kommt.

Die Ausdrucksweise auf der Unterlage 3 aufliegendes und/oder ein über der Unterlage 3 verlaufendes Befestigungselement 12 ist so zu verstehen, dass keine Elemente die Oberfläche 27 der Unterlage 3 durchdringen. Folglich liegt das Befestigungselement 12 also auf der Oberfläche 27 auf bzw. es verläuft über der Oberfläche 27. Das Befestigungselement 12 liegt also auf der Unterlage 3 auf und/oder es erstreckt sich in einer Ebene, die über der Oberfläche 27 der Unterlage 3 beabstandet zu der Unterlage 3 liegt, so dass das Befestigungselement 12 nicht in die Unterlage 3 eindringt. Diese Anordnung hat den Vorteil, dass keine in die Unterlage 3 eindringende Befestigungselemente vorzusehen sind. Gerade bei der Anordnung von einer Solaranlage auf einem Flachdach ist dies besonders vorteilhaft, denn dadurch wird die Dichtigkeit des Flachdachs nicht beeinträchtigt, weil eben keine Elemente in das Flachdach eindringen. Zudem kann die Solaranlage mit den Lagerungsvorrichtungen 1 einfach und in kurzer Zeit montiert werden.

Das Befestigungselement 12 kann verschiedenartig ausgebildet sein. Es gibt im Wesentlichen vier verschiedene vorteilhafte Ausführungsformen gemäss der folgenden Aufzählung:
a. das Befestigungselement 12 hat die Gestalt von mindestens einem Verbindungselementes 14, welches eine Verbindung zwischen dem ersten Auflageelement 4 und dem zweiten Auflageelement 8 bereitstellt; oder
b. das Befestigungselement 12 weist die Gestalt eines Profilelementes 15 auf, welches auf der Unterlage 3 aufliegt und eine Aufnahme für die Stützabschnitte 6, 10 des ersten Auflageelementes 4 bzw. des zweiten Auflageelementes 8 bereitstellt; oder
c. das Befestigungselement 12 umfasst eine Kombination aus dem mindestens einen Verbindungselement 14 und dem mindestens einen Profilelement 15; oder
d. das Befestigungselement 12 hat die Gestalt von einem Blockierungselement im Bereich der Verbindungsabschnitte.

Nur die Ausführungsformen b. und c. sind erfindungsgemäss.

Die oben genannte Aufzählung ist nicht abschliessend anzusehen und es ist möglich, andere Kombinationen der verschiedenen Elemente, die unter der Ausdrucksweise Befestigungselement zusammengefasst sind, im Lichte der vorliegenden Beschreibung bereitzustellen.

Das Befestigungselement 12 kann gemäss Ausführungsform a), die nicht erfindungsgemäss ist, die Gestalt eines Verbindungselementes 14 aufweisen, welches eine direkte und/oder eine indirekte Verbindung zwischen dem ersten Auflageelement 4 und dem zweiten Auflageelement 8 bereitstellt. Unter einer direkten Verbindung wird hier ein direkter Kontakt zwischen dem Verbindungselement 14 und dem jeweiligen Auflageelement 4, 8 verstanden. Unter einem indirekten Kontakt wird hier ein Kontakt über mindestens ein weiteres Element zwischen dem Verbindungselement 14 und dem jeweiligen Auflageelement 4, 8 verstanden. Das weitere Element kann beispielsweise das Profilelement 15 sein, wie dies dann weiter unten ausgeführt wird.

Das Verbindungselement 14 verhindert also eine Relativbewegung zwischen dem ersten Auflageelement 4 und dem zweiten Auflageelement 8.

Bei der direkten Verbindung steht das Verbindungselement 14 vorzugsweise im Bereich der Stützabschnitte 6, 10 mit den Auflageelementen 4, 8 direkt in Verbindung. Beispielsweise kann das Verbindungselement 14 mit dem Auflageelement 4, 8 verschraubt oder vernietet werden.

Vorzugsweise weist das Verbindungselement 14 die Gestalt eines Stabes zur Übertragung von Zug- und/oder Druckkräften auf. Alternativ kann das Verbindungselement 14 aber auch die Form eines Elementes aufweisen, mit welchem im Wesentlichen Zugkräfte übertragbar sind. Hierfür kann ein Seil, ein Draht und/oder eine Kette eingesetzt werden.

Aus der Figur 2 kann ebenfalls gut erkannt werden, dass vorzugsweise pro Paarung bestehend aus dem ersten Auflageelement 4 und dem zweiten Auflageelement 8 je ein Verbindungselement 14 vorgesehen ist.

Beim Einsatz des Befestigungselementes 12 als Verbindungselement 14 stehen die Auflageelemente 4, 8 vorzugsweise über den Stützabschnitt 6, 10 direkt auf der Unterlage 3 auf. Es handelt sich hier also vorteilhafterweise um eine direkte Auflage durch die Auflageelemente 4, 8 auf der Unterlage 3.

Das Befestigungselement nach der Ausführungsform b) umfasst mindestens ein auf der Unterlage 3 aufliegendes Profilelement 15. Das Profilelement 15 stellt dabei eine Aufnahme für den Stützabschnitt 6, 10 des jeweiligen Auflageelementes 4, 8 bereit. Das Profilelement 15 selbst liegt derart auf der Unterlage, dass die durch die Auflageelemente 4, 8 auf das Profilelement 15 wirkenden Kräfte die Reibungskraft zwischen dem Profilelement 15 und der Unterlage 3 nicht überschreiten.

Das Profilelement 15 erstreckt sich auf der Unterlage 3 bzw. liegt auf der Unterlage 3 auf, ohne dass Teile des Profilelementes 15 in die Unterlage 3 eindringen. Besonders bevorzugt liegt das Profilelement 15 direkt auf der Unterlage 3 auf.

Wenn die Auflageelemente 4, 8 mit dem Profilelement 15 in Verbindung stehen, so liegen die Auflageelemente 4, 8 indirekt auf der Unterlage 3 auf. Es handelt sich hier also um die indirekte Auflage der Auflageelemente 4, 8 auf der Unterlage 3, so wie dies oben bereits erläutert wurde.

In der vorliegenden Ausführungsform sind pro Auflageelement 4, 8 je ein Profilelement 15 angeordnet. Das heisst, dass jedes der Auflageelement 4, 8 mit einem Profilelement 15 in Verbindung steht. Alternativ kann auch nur ein Profilelement 15 angeordnet sein, wobei dann eines der Auflageelement 4, 8 direkt auf der Unterlage aufsteht.

Das erste Auflageelement 4 erstreckt sich entlang einer ersten Mittelachse M1 und das zweite Auflageelement 8 erstreckt sich entlang einer zweiten Mittelachse M2. Eine Ebene E erstreckt durch diese Mittelachsen M1, M2 bzw. parallel zu diesen beiden Mittelachsen M1, M2. Das mindestens eine Profilelement 15 verläuft im Wesentlichen rechtwinklig zu dieser Ebene E. Mit anderen Worten kann auch gesagt werden, dass ich das Profilelement 15 im Wesentlichen rechtwinklig zu der oder den Mittelachse(n) M1, M2 erstreckt.

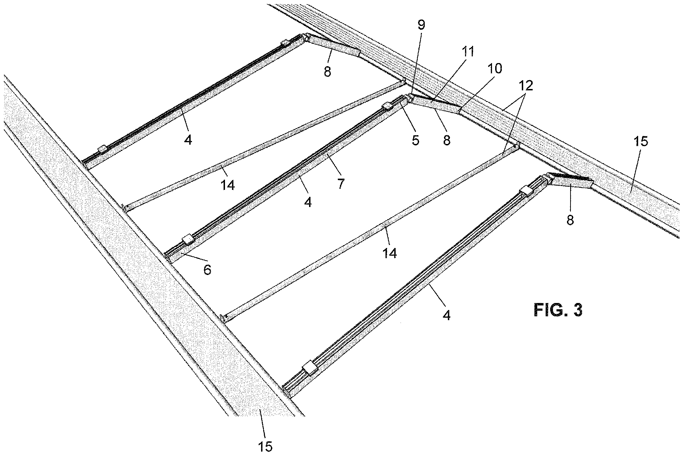

In den Figuren 2 und 3 wird nun die Ausführungsform c) gezeigt. Gemäss dieser Ausführungsform umfasst das Befestigungselement mindestens ein Verbindungselement 14 und mindestens ein Profilelement 15, wobei das Verbindungselement 14 mit dem Profilelement 15 direkt oder indirekt in Verbindung steht. Hier sind pro Auflageelement 4, 8 je ein Profilelement 15 angeordnet.

Das Verbindungselement 14 steht hier mit den beiden parallel zueinander verlaufenden Profilelementen 15 direkt in Verbindung. Dabei nimmt das Verbindungselement 14 eventuell auftretende Zug- und/oder Druckkräfte zwischen den beiden Profilelementen 15 auf.

In der Ausführungsform nach den Figuren 2 und 3 stehen die Auflageelemente 4, 8 mit dem jeweiligen Stützabschnitt 6, 10 indirekt über das Profilelement 15 mit der Unterlage 3 in Verbindung. Weiter steht das Verbindungselement 14 indirekt über die Profilelemente 15 mit den Auflageelementen 4, 8 in Verbindung.

Bei der hier nicht dargestellten direkten Verbindungsart zwischen dem Verbindungselement 14 und den Auflageelementen 4, 8 steht das Verbindungselement 14 mit den beiden Auflageelementen 4, 8 direkt ohne den Kontakt mit den Profilelementen 15 in Verbindung. Folglich besteht über diese Auflageelemente 4, 8 eine direkte Verbindung zwischen dem Verbindungselement 14 und den beiden Auflageelementen 4, 8.

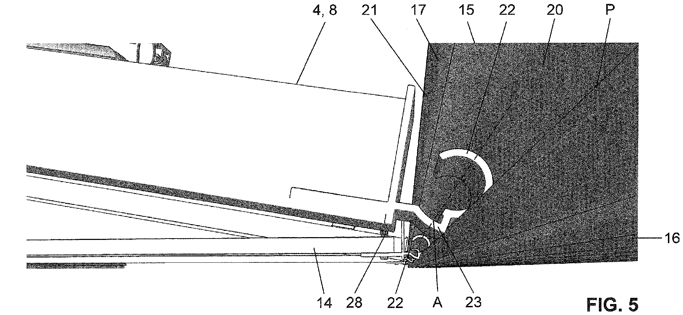

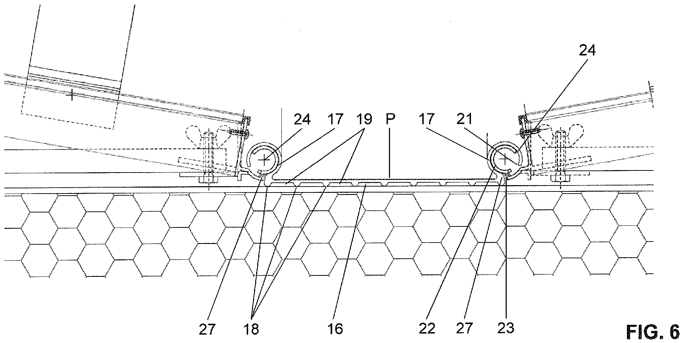

Die Figuren 5 und 6 zeigen bevorzugte Verbindungsarten zwischen Profilelement 15 und Auflageelement 4, 8 bzw. Profilelement 15 und Verbindungselement 14.

Das Profilelement 15 umfasst im Querschnitt gesehen einen sich in Richtung der Profilachse P erstrecken Grundschenkel 16, von dem an mindestens einer Seite, vorzugsweise an beiden Seiten, ein Aufnahmeschenkel 17 zur Aufnahme der Stützabschnitte 6, 10 angeformt ist. Die Profilachse P verläuft in der Figur 6 senkrecht zur Oberfläche des Zeichnungsblattes. Das Profilelement 15 liegt dabei mit dem Grundschenkel 16 auf der Unterlage 3 auf. In der vorliegenden Ausführungsform umfasst der Grundschenkel 16 weiterhin Auflagestege 18, welche sich entlang der Profilachse P verlaufen vom Grundschenkel 16 erheben. Hier stehen diese Auflagestege 18 mit der Unterlage 3 in Kontakt. Die Auflagestege 18 begrenzen Zwischenräume 19. Durch die Auflagestege 18 wird ein flächiger Kontakt zwischen Grundschenkel 16 und Unterlage 3 vermieden, wodurch eintretende Feuchtigkeit zwischen Unterlage 3 und Grundschenkel 16 besser trocknen kann. Wie in den Figuren ersichtlich wird, ist jeweils beidseitig, also links und rechts, vom Grundschenkel 16 je ein Aufnahmeschenkel 17 angeordnet.

Vorzugsweise erstreckt sich der mindestens eine Aufnahmeschenkel 17 über die gesamte Länge des Profilelementes 15 entlang der Profilachse P. Alternativ kann der Aufnahmeschenkel 17 auch entlang der Profilachse P gesehen abschnittsweise unterbrochen ausgebildet sein.

Der Aufnahmeschenkel 17 erstreckt sich teilweise um eine parallel zur Profilachse P verlaufende Achse A herum, so dass ein zylindrischer Aufnahmeraum 20 mit einer Zugangsöffnung 21 für die Aufnahme des Stützabschnittes 6, 10 bereitstellbar ist. Der Stützabschnitt 6, 10 ragt dann in diesen Aufnahmeraum 20 hinein. Mit anderen Worten kann auch gesagt werden, dass der Aufnahmeschenkel 17 um die Achse A gebogen ausgebildet ist.

Der Stützabschnitt 6, 10 umfasst hier einen Stützkörper 21, welcher komplementär zum Aufnahmeraum 20 ausgebildet ist und in den Aufnahmeraum 20 hinein ragt. Der Stützkörper 21 erstreckt sich abschnittsweise um die Achse A herum. Der Stützkörper 22 wird durch den Aufnahmeraum 20 mit einer zylindrischen Überdeckung überdeckt. Aufgrund der komplementären Ausbildung kann der Stützkörper 22 und somit die Auflageelemente 4, 8 zum Aufnahmeraum 20 hin um die Achse A verschwenkt werden, wodurch der Neigungswinkel der Auflageelemente 4, 8 zur Unterlage 3 einstellbar wird.

Die Paarung zwischen Aufnahmeschenkel 17 und Stützkörper 21 kann auch als Scharnier bezeichnet werden.

Weiter umfasst der Stützkörper 22 ein Anschlagselement 23, welches sich vom Stützkörper 21 nach aussen hin erstreckt. Das Anschlagselement 23 kann an der Seitenkante 27 des Grundschenkels 16 entsprechend anschlagen. Mit diesem Anschlagselement 23 kann der minimal einstellbare Neigungswinkel eingestellt werden.

Der Stützkörper 21 erstreckt sich vorzugweise nicht vollständig um die A, sondern ist mit einem Unterbruch 24 versehen. Aufgrund der Anordnung dieses Unterbruchs 24 kann der Stützkörper 21 einfach in den Aufnahmeraum 20 quer zur Achse A eingefahren werden. Mit anderen Worten kann auch gesagt werden, dass der Stützkörper 21 in den Aufnahmeraum 20 über eine Schwenkbewegung einhängbar ist. Somit wird eine Verbindung zwischen den Auflageelementen und dem Profilelement 16 erlaubt, welche ohne die Verwendung eines Werkzeuges montierbar ist. Gerade letzteres senkt die Zeit der Montage eines solchen Systems deutlich.

Der Stützabschnitt 6, 10 steht fest mit dem Auflageelement 4, 8 in Verbindung. Bevorzugterweise handelt es sich beim Stützabschnitt 6, 10 um ein separat vom Auflageelement 4, 8 ausgebildetes Element, welches mit dem Auflageelement 4, 8 verschraubt wird.

Das in den Figuren 5 und 6 gezeigte Verbindungselement 14 weist hier an beiden Enden ebenfalls ein Stützkörper 22 auf, welcher gleichermassen in den Aufnahmeraum 20 des Profilelementes 15 eingreift. Der Stützkörper 22 ist dabei mit dem Verbindungselement über eine Schraubverbindung 28 verbunden.

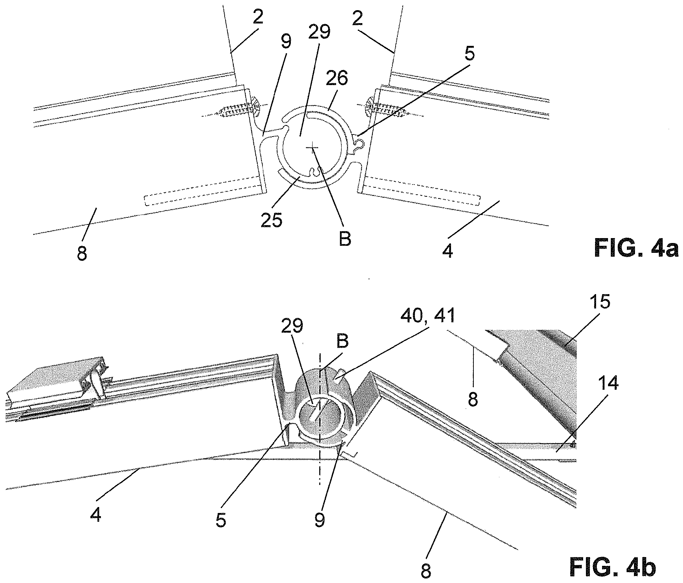

In den Figuren 4a und 4b werden die Verbindungsabschnitte 5, 9 der beiden Auflageelemente 4, 8 gezeigt. Die Verbindungsabschnitte 5, 9 können aber auch analog zu der Verbindung zwischen Profilelement 15 und Stützabschnitt 6 ausgebildet sein.

Der Verbindungsabschnitt 5 des einen Auflageelementes 4, 8 steht über eine zylindrische oder eine kugelige Überdeckung mit dem Verbindungsabschnitt des anderen Auflageelementes 8, 4 in Verbindung. Hier in der vorliegenden Ausfiihrungsform wird eine zylindrische Überdeckung gezeigt, weshalb mit anderen Worten auch von einer Scharnierverbindung zwischen dem Auflageelement 4 und dem Auflageelement 8 gesprochen werden kann.

Vorzugsweise umfasst der Verbindungsabschnitt 5, 9 des einen Auflageelementes 4, 8 einen Zapfen 25, während der Verbindungsabschnitt 5, 9 des anderen Auflageelementes 4, 8 ein den Zapfen 25 umgreifendes Element 26 bereitstellt. Der Zapfen 25 erstreckt sich zylindrisch entlang einer Mittelachse B und ragt dabei in den Innenraum 29 des umgreifende Elementes 26 ein. Der Innenraum 29 erstreckt sich ebenfalls entlang der Achse B. Das umgreifende Element 26 ist hier zweiteilig ausgebildet, so dass eine Montage quer zur Achsrichtung B ermöglicht wird.

Mit Hilfe der Figur 4b wird eine nicht erfindungsgemässe. Ausführungsform der Verbindungsabschnitte 5, 9 gezeigt. Nach den Verbindungsabschnitte 5, 9 der 4b ist weiterhin ein Blockierungselement 40 vorgesehen, welches die vierte, nicht erfindungsgemässe Ausführungsform d) des Befestigungselementes 12 darstellt. Das Blockierungselement 40 hat die Gestalt eines Stiftes 41, welcher durch den Zapfen 25 und das umgreifende Element 26 hindurch ragt und so die Relativbewegung zwischen Zapfen 25 und Element 26 blockiert. Je nach Anwendungsfall kann das Blockierungselement 40 alleine oder zusammen mit dem Verbindungselement 14 und/oder dem Profilelement 15 eingesetzt werden.

Bei beiden Ausführungsformen der Verbindungsabschnitte 5, 9 sei hier noch angemerkt, dass diese vorzugsweise über eine Schraubverbindung mit dem Lagerungsabschnitt 7, 11 bzw. mit den Auflageelementen 4, 8 in Verbindung stehen. Andere Verbindungsarten sind auch denkbar.

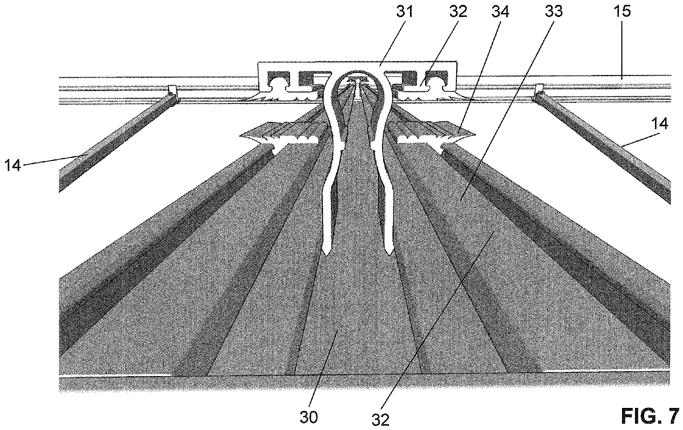

In der Figur 7 kann dann weiter eine bevorzugte Art der Befestigung der Solarmodule 2 auf den Auflageelementen 4, 8 erkannt werden. Bevorzugterweise umfassen die Auflageelement 4, 8 mindestens eine in axialer Richtung verlaufende Nut 30. Die Nut 30 dient der Aufnahme eines Klippelementes 31, welches mit einer Anschlagsfläche 32 versehen ist. Das Klippelement 31 klemmt dann das Solarmodul 2 gegen die Auflageoberfläche 33 der Auflageelemente 4, 8. Das Solarmodul 2 steht also mit der Auflageoberfläche 332 der Auflageelement 4, 8 und der Anschlagsfläche 32 in Kontakt.

Das Klippelement 31 umfasst vorzugsweise weiterhin im Bereich der Anschlagsfläche 32 eine Gummielement 33, welches in Kontakt mit dem Solarmodul kommt. Gleiches gilt für die Auflagefläche, welche ebenfalls über ein Gummielement 34 bereitgestellt werden kann.

Beide Gummielemente 33, 34 ragen dabei in entsprechende Nuten ein, welche an den einzelnen Elementen bereitgestellt sind.

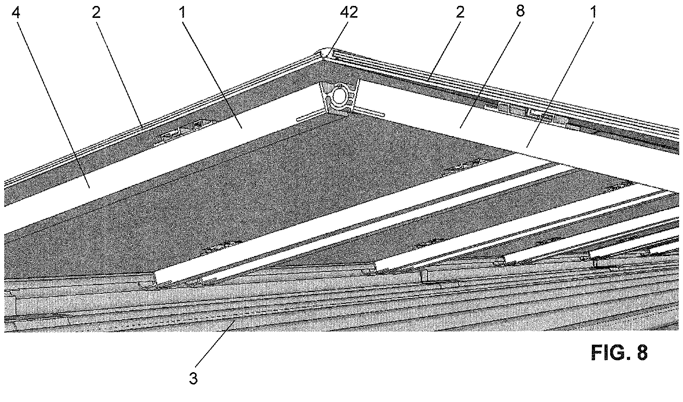

In der Figur 8 wird eine weitere Detailansicht der Lagerungsvorrichtung 1 gezeigt. Gleiche Teile sind dabei mit gleichen Bezugszeichen versehen. Auf der Lagerungsvorrichtung 1 liegen sowohl auf dem ersten Auflageelement 4 als auch auf dem zweiten Auflageelement 8 je ein Solarmodul 2 auf. Die beiden Solarmodule stehen mit einem Dichtungselement 42 miteinander in Verbindung. Die Dichtung 42 dichtet dabei den Spalt zwischen den beiden Solarmodulen 2 ab, so dass kein Wasser zwischen die Unterlage 3 und die Solarmodule 2 eindringen kann. Seitlich können die Solarmodule ebenfalls über Dichtungselemente mit benachbarten Solarmodulen verbunden werden. Die Anordnung eines Dichtungselementes 42 entlang den Kanten von zwei benachbarten Solarmodulen 2 hat den Vorteil, dass mit den Solarmodulen bereits eine bezüglich Wasser dichte Struktur bereitgestellt werden kann. Insofern eignet sich diese Anordnung besonders bei der Sanierung von Flachdächern.

Das Wasser, welches dann über die Solarmodule 2 abfliesst kann dann über Profilelement 15 entsprechend weggeführt werden.

**BEZUGSZEICHENLISTE**

| | | | |
|---|---|---|---|
| 1 | Lagerungsvorrichtung | 21 | Zugangsöffnung |
| 2 | Solarmodul | 22 | Stützkörper |
| 3 | Unterlage | 23 | Anschlag |
| 4 | erstes Auflageelement | 24 | Unterbruch |
| 5 | Verbindungsabschnitt | 25 | Zapfen |
| 6 | Stützabschnitt | 26 | umgreifendes Element |
| 7 | Lagerungsabschnitt | 27 | Seitenkante |
| 8 | zweites Auflageelement | 28 | Schraubverbindung |
| 9 | Verbindungsabschnitt | 29 | Innenraum |
| 10 | Stützabschnitt | 30 | Nuten |
| 11 | Lagerungsabschnitt | 31 | Klippelement |
| 12 | Befestigungselement | 32 | Anschlagsfläche |
| 13 | Platte | 33 | Gummielement |
| 14 | Verbindungselementes | 34 | Gummielement |
| 15 | Profilelement | | |
| 16 | Grundschenkel | | |
| 17 | Aufnahme schenkel | 40 | Blockierungselement |
| 18 | Auflagestege | 41 | Stift |
| 19 | Zwischenräume | 42 | Dichtungselement |
| 20 | Aufnahmeraum | | |

## Patentansprüche

1. Anordnung umfassend mindestens ein Solarmodul (2) und mindestens eine Lagerungsvorrichtung (1) für die Lagerung des mindestens einen Solarmoduls auf einer Unterlage (3), wobei die mindestens eine Lagerungsvorrichtung (1) ein erstes Auflageelement (4) mit einem Verbindungsabschnitt (5), einem Stützabschnitt (6) und einem zwischen dem Verbindungsabschnitt (5) und Stützabschnitt (6) angeordneten Lagerungsabschnitt (7) zur Aufnahme des besagten mindestens einen Solarmoduls (2) und ein zweites Auflageelement (8) mit einem Verbindungsabschnitt (9), einem Stützabschnitt (10) und einem optionalen Lagerungsabschnitt (11) umfasst,
wobei das mindestens eine Solarmodul (2) mit den besagten Lagerungsabschnitten gelagert ist,
wobei der Verbindungsabschnitt (5) des ersten Auflageelementes (4) verschwenkbar mit dem Verbindungsabschnitt (9) des zweiten Auflageelementes (8) in Verbindung steht, und wobei die beiden Auflageelemente (4, 8) mit dem jeweiligen Stützabschnitt (6, 10) indirekt auf der Unterlage (3) aufstehen können,
wobei
die Lagerungsvorrichtung (1) weiterhin ein auf der Unterlage (3) aufliegbares und/oder ein über der Unterlage (3) verlaufbares Befestigungselement (12) aufweist, wobei durch das Befestigungselement (12) eine Relativbewegung zwischen dem ersten Auflageelement (4) und dem zweiten Auflageelement (8) bzw. zwischen den Auflageelementen (4, 8) und der Unterlage (3) verhinderbar ist, wobei das Befestigungselement (12) die Gestalt von mindestens einem Profilelement (15) aufweist, wobei das Profilelement eine Aufnahme für den Stützabschnitt (6, 10) des jeweiligen Auflageelementes (4, 8) bereitstellt, wobei das mindestens eine Profilelement (15) im Querschnitt gesehen einen sich in Richtung einer Profilachse (P) erstreckenden Grundschenkel (16) umfasst, von dem an mindestens einer Seite, vorzugsweise an beiden Seiten, ein Aufnahmeschenkel (17) zur Aufnahme der Stützabschnitte (6, 10) angeformt ist, wobei sich das erste Auflageelement (4) entlang einer ersten Mittelachse (M1) erstreckt und dass sich das zweite Auflageelement (8) entlang einer zweiten Mittelachse (M2) erstreckt, wobei sich eine Ebene (E) durch diese Mittelachsen (M1, M2) erstreckt oder wobei sich eine Ebene (E) parallel zu diesen Mittelachsen (M1, M2) erstreckt, und dass sich das mindestens eine Profilelement (15) im Wesentlichen rechtwinklig zu dieser Ebene (E) verläuft, und/oder dass sich das Profilelement (15) im Wesentlichen rechtwinklig zu der oder den Mittelachse(n) (M1, M2) erstreckt, **dadurch gekennzeichnet, dass** der Aufnahmeschenkel (17) sich teilweise um eine parallel zur Profilachse (P) verlaufende Achse (A) herum erstreckt, so dass ein zylindrischer Aufnahmeraum (20) mit einer Zugangsöffnung (21) für den Stützabschnitt (6, 10) bereitstellbar ist.

2. Anordnung nach einem der vorhergehenden Ansprüche, **dadurch gekennzeichnet, dass** das mindestens eine Profilelement (15) direkt auf der Oberfläche (27) der Unterlage (3) aufliegen kann.

3. Anordnung der vorhergehenden Ansprüche, **dadurch gekennzeichnet, dass** das Befestigungselement (12) weiter mindestens ein Verbindungselement (14) umfasst, wobei das Verbindungselement (14) mit dem mindestens einen Profilelement (15) direkt oder indirekt, vorzugsweise über die Auflageelement (4, 8) in Verbindung steht, und wobei das mindestens eine Profilelement (15) eine Aufnahme für den Stützabschnitt (6, 10) des jeweiligen Auflageelementes (4, 8) bereitstellt.

4. Anordnung Anspruch 3, **dadurch gekennzeichnet, dass** das Verbindungselement (14) im Bereich der Stützabschnitte (6, 10) mit dem ersten Auflageelement (4) und dem zweiten Auflageelement (8) in Verbindung steht.

5. Anordnung einem der vorhergehenden Ansprüche 3 oder 4, **dadurch gekennzeichnet, dass** das mindestens eine Verbindungselement (14) die Gestalt eines Stabes oder eines Elementes zur Übertragung von Zugkräften, insbesondere ein Seil und/oder ein Draht und/oder eine Kette, aufweist, und/oder dass pro Paarung bestehend aus dem ersten Auflageelement (4) und dem zweiten Auflageelement (8) je ein Verbindungselement (14) vorgesehen ist..

6. Anordnung nach einem der vorhergehenden Ansprüche, **dadurch gekennzeichnet, dass** sich der Aufnahmeschenkel (17) über die gesamte Länge des mindestens einen Profilelementes (15) entlang der Profilachse (P) erstreckt, oder dass der Aufnahmeschenkel (17) entlang der Profilachse gesehen abschnittsweise unterbrochen ist.

7. Anordnung nach einem der vorhergehenden Ansprüche, **dadurch gekennzeichnet, dass** der Verbindungsabschnitt (5) des einen Auflageelementes (4, 8) über eine zylinderische oder eine kugelige Überdeckung mit dem Verbindungsabschnitt des anderen Auflageelementes (8, 4) in Verbindung steht.

8. Anordnung nach einem der vorhergehenden Ansprüche, **dadurch gekennzeichnet, dass** der Verbindungsabschnitt (5, 9) des einen Auflageelementes (4, 8) einen Zapfen (25) bereitstellt, während der Verbindungsabschnitt (5, 9) des anderen Auflageelementes (4, 8) ein den Zapfen (25) umgreifendes Element (26) bereitstellt.

9. Anordnung nach einem der vorhergehenden Ansprüche, **dadurch gekennzeichnet, dass** die Vorrichtung weiter mindestens ein Klippelement (31) zur Sicherung des mindestens einen Solarmoduls (2) auf der Lagerungsvorrichtung (1) aufweist, und dass die Auflageelemente (4, 8) mindestens eine Nut aufweisen, in welche das Klippelement (31) einrastet.

10. Anordnung nach einem der vorhergehenden Ansprüche, **dadurch gekennzeichnet, dass** die Anordung mehrere Solarmodule umfasst und dass zwischen zwei benachbarten Solarmodulen ein Dichtungselement (42) angeordnet ist, welches den Spalt zwischen den beiden Solarmodulen (2) dichtet.

## Claims

1. Arrangement comprising at least one solar module (2) and at least one mounting device (1) for mounting the at least one solar module on a base (3), wherein the at least one mounting device (1) comprises a first bearing element (4) having a connecting portion (5), a supporting portion (6) and a mounting portion (7) which is arranged between the connecting portion (5) and supporting portion (6) and intended for receiving said at least one solar module (2), and a second bearing element (8) having a connecting portion (9), a supporting portion (10) and an optional mounting portion (11), wherein the at least one solar module (2) is mounted with said mounting portions, wherein the connecting portion (5) of the first bearing element (4) is pivotably in connection with the connecting portion (9) of the second bearing element (8), and wherein the two bearing elements (4, 8) can stand indirectly on the base (3) by way of the respective supporting portion (6, 10), wherein the mounting device (1) further has a fastening element (12) which can be placed on the base (3) and/or which can run above the base (3), wherein a relative movement between the first bearing element (4) and the second bearing element (8) or between the bearing elements (4, 8) and the base (3) can be prevented by means of the fastening element (12), wherein the fastening element (12) has the form of at least one profile element (15), wherein the profile element provides a receptacle for the supporting portion (6, 10) of the respective bearing element (4, 8), wherein, as viewed in cross section, the at least one profile element (15) comprises a base leg (16) which extends in the direction of a profile axis (P) and from which a receiving leg (17) for receiving the supporting portions (6, 10) is integrally formed on at least one side, preferably on both sides, wherein the first bearing element (4) extends along a first centre axis (M1), and that the second bearing element (8) extends along a second centre axis (M2), wherein a plane (E) extends through these centre axes (M1, M2) or wherein a plane (E) extends parallel to these centre axes (M1, M2), and that the at least one profile element (15) runs substantially at a right angle to this plane (E), and/or that the profile element (15) extends substantially at a right angle to the centre axis or centre axes (M1, M2), **characterized in that** the receiving leg (17) partially extends around an axis (A) running parallel to the profile axis (P), such that a cylindrical receiving space (20) with an access opening (21) for the supporting portion (6, 10) is provided.

2. Arrangement according to one of the preceding claims, **characterized in that** the at least one profile element (15) can lie directly on the surface (27) of the base (3).

3. Arrangement according to one of the preceding claims, **characterized in that** the fastening element (12) further comprises at least one connecting element (14), wherein the connecting element (14) is connected to the at least one profile element (15) directly or indirectly, preferably by way of the bearing element (4, 8), and wherein the at least one profile element (15) provides a receptacle for the supporting portion (6, 10) of the respective bearing element (4, 8).

4. Arrangement according to Claim 3, **characterized in that** the connecting element (14) is in connection with the first bearing element (4) and the second bearing element (8) in the region of the supporting portions (6, 10) .

5. Arrangement according to one of the preceding Claims 3 or 4, **characterized in that** the at least one connecting element (14) has the form of a bar or of an element for transmitting tensile forces, in particular a cable and/or a wire and/or a chain, and/or **in that** a respective connecting element (14) is provided for each pairing consisting of the first bearing element (4) and the second bearing element (8).

6. Arrangement according to one of the preceding claims, characterized that the receiving leg (17) extends over the entire length of the at least one profile element (15) along the profile axis (P), or in that the receiving leg (17) is interrupted in sections as viewed along the profile axis.

7. Arrangement according to one of the preceding claims, **characterized in that** the connecting portion (5) of the one bearing element (4, 8) is in connection with the connecting portion of the other bearing element (8, 4) via a cylindrical or a spherical covering.

8. Arrangement according to one of the preceding claims, **characterized in that** the connecting portion (5, 9) of the one bearing element (4, 8) provides a plug (25), while the connecting portion (5, 9) of the other bearing element (4, 8) provides an element (26) which engages around the plug (25).

9. Arrangement according to one of the preceding claims, **characterized in that** the device further has at least one clip element (31) for securing the at least one solar module (2) on the mounting device (1), and **in that** the bearing elements (4, 8) have at least one groove into which the clip element (31) latches.

10. Arrangement according to one of the preceding claims, **characterized in that** the arrangement comprises several solar modules, and **in that** a sealing element (42) is arranged between two adjacent solar modules and seals the gap between the two solar modules (2).

## Revendications

1. Ensemble comprenant au moins un module solaire (2) et au moins un dispositif de montage (1) destiné à monter l'au moins un module solaire sur une base (3), l'au moins un dispositif de montage (1) comprenant
un premier élément d'appui (4) pourvu d'une portion de liaison (5), d'une portion de support (6) et d'une portion de montage (7) disposée entre la portion de liaison (5) et la portion de support (6) et destinée à recevoir ledit au moins un module solaire (2) et
un deuxième élément d'appui (8) pourvu d'une portion de liaison (9), d'une portion de support (10) et d'une portion de montage (11) optionnelle,
l'au moins un module solaire (2) étant monté avec lesdites portions de montage,
la portion de liaison (5) du premier élément d'appui (4) étant reliée de manière pivotante à la portion de liaison (9) du deuxième élément d'appui (8), et les deux éléments d'appui (4, 8) avec la portion de support respective (6, 10) pouvant se tenir indirectement sur la base (3),
le dispositif de montage (1) comportant en outre un élément de fixation (12) qui peut être placé sur la base (3) et/ou un qui peut s'étendre au-dessus de la base (3), un mouvement relatif entre le premier élément d'appui (4) et le deuxième élément d'appui (8) ou entre les éléments d'appui (4, 8) et la base (3) pouvant être empêché par l'élément de fixation (12), l'élément de fixation (12) ayant la forme d'au moins un élément profilé (15), l'élément profilé fournissant un logement pour la portion de support (6, 10) de l'élément d'appui respectif (4, 8),
l'au moins un élément profilé (15), vu en coupe transversale, comprenant une branche de base (16) qui s'étend dans la direction d'un axe profilé (P) et de laquelle une branche de réception (17) est formée pour recevoir les portions de support (6 , 10) sur au moins un côté, de préférence des deux côtés,
le premier élément d'appui (4) s'étendant le long d'un premier axe central (M1) et que le deuxième élément d'appui (8) s'étend le long d'un deuxième axe central (M2), un plan (E) passant pas ces axes centraux (M1, M2) ou un plan (E) s'étendant parallèlement à ces axes centraux (M1, M2), et que l'au moins un élément profilé (15) s'étend sensiblement à angle droit par rapport à ce plan (E), et/ou que l'élément profilé (15) s'étend sensiblement à angle droit par rapport à l'axe central ou aux axes centraux (M1, M2), **caractérisé en ce que** la branche de réception (17) s'étend partiellement autour d'un axe (A) s'étendant parallèlement à l'axe de profilé (P) de façon à ménager un espace de réception cylindrique (20) pourvu d'une ouverture d'accès (21) destinée à la portion de support (6, 10).

2. Ensemble selon l'une des revendications précédentes, **caractérisé en ce que** l'au moins un élément profilé (15) peut être placé directement sur la surface (27) de la base (3).

3. Ensemble selon l'une des revendications précédentes, **caractérisé en ce que** l'élément de fixation (12) comprend en outre au moins un élément de liaison (14), l'élément de liaison (14) étant relié directement ou indirectement à l'au moins un élément profilé (15), de préférence par le biais de l'élément d'appui (4, 8), et l'au moins un élément profilé (15) fournissant un logement destiné à la portion de support (6, 10) de l'élément d'appui respectif (4, 8).

4. Ensemble selon la revendication 3, **caractérisé en ce que** l'élément de liaison (14) est relié au premier élément d'appui (4) et au deuxième élément d'appui (8) dans la région des portions de support (6, 10).

5. Ensemble selon l'une des revendications précédentes 3 et 4, **caractérisé en ce que** l'au moins un élément de liaison (14) a la forme d'une barre ou d'un élément de transmission de forces de traction, notamment un câble et/ou un fil et/ou une chaîne, et/ou **en ce qu'**un élément de liaison (14) est prévu pour chaque appariement comprenant le premier élément d'appui (4) et le deuxième élément d'appui (8).

6. Ensemble selon l'une des revendications précédentes, **caractérisé en ce que** la branche de réception (17) s'étend sur toute la longueur de l'au moins un élément profilé (15) le long de l'axe de profilé (P), ou **en ce que** la branche de réception (17), vue le long de l'axe de profilé, est interrompue par portions.

7. Ensemble selon l'une des revendications précédentes, **caractérisé en ce que** la portion de liaison (5) de l'un des éléments d'appui (4, 8) est reliée à la portion de liaison de l'autre élément d'appui (8, 4) par le biais d'un élément de recouvrement cylindrique ou sphérique.

8. Ensemble selon l'une des revendications précédentes, **caractérisé en ce que** la portion de liaison (5, 9) de l'un des éléments d'appui (4, 8) fournit une broche (25), tandis que la portion de liaison (5, 9) de l'autre élément d'appui (4, 8) fournit un élément (26) s'engageant autour de la broche (25) .

9. Ensemble selon l'une des revendications précédentes, **caractérisé en ce que** le dispositif comprend en outre au moins un élément d'agrafage (31) destiné à fixer l'au moins un module solaire (2) sur le dispositif de montage (1), et **en ce que** les éléments d'appui (4, 8) comportent au moins une rainure dans laquelle s'encliquète l'élément d'agrafage (31).

10. Ensemble selon l'une des revendications précédentes, **caractérisé en ce que** l'ensemble comprend une pluralité de modules solaires et **en ce qu'**un élément d'étanchéité (42), qui réalise l'étanchéité de l'intervalle ménagé entre les deux modules solaires (2), est disposé entre deux modules solaires adjacents.
